# EUROPÄISCHE PATENTSCHRIFT

(11) **EP 3 981 662 B1**
(45) Veröffentlichungstag und Bekanntmachung des Hinweises auf die Patenterteilung: **01.05.2024**
(21) Anmeldenummer: 21200768.6
(22) Anmeldetag: 04.10.2021
(51) Int. Cl.: B61C 17/04, F04D 19/00, F04D 29/60, F28D 1/02, F28F 9/00, B60K 11/04

(54) **FAHRZEUGKÜHLANLAGE**
VEHICLE COOLING SYSTEM
INSTALLATION DE REFROIDISSEMENT DE VÉHICULE

(30) Priorität: 09.10.2020 DE 102020212790
(43) Veröffentlichungstag der Anmeldung: 13.04.2022
(73) Patentinhaber: MAHLE International GmbH, 70376 Stuttgart (DE)
(72) Erfinder: GÄHR, Thomas, 70190 Stuttgart (DE); KRIEGELSTEIN, Edgar, 71636 Ludwigsburg (DE); RENZ, Marco, 73732 Esslingen (DE); WEIKE, Thomas, 71570 Oppenweiler (DE)
(74) Vertreter: BRP Renaud & Partner mbB Rechtsanwälte Patentanwälte Steuerberater

(56) Entgegenhaltungen:
- WO-A1-2016/042231
- CN-U- 203 381 629
- FR-A2- 2 189 697
- US-A- 4 185 688

## Beschreibung

Die vorliegende Erfindung betrifft eine Fahrzeugkühlanlage.

Komponenten eines Schienenfahrzeuges, wie Stromrichter oder Transformatoren eines Triebzugs, können über eine Fahrzeugkühlanlage bzw. einen Kühlturm gekühlt werden. Ein solcher Kühlturm ist beispielsweise aus der CN 205 220 664 U bekannt. Fahrzeugkühlanlagen sind aus der WO 2016/042231 A1 und US 4,185,688 A bekannt.

Nachteilig an bekannten Fahrzeugkühlanlagen ist, dass die Gebläsevorrichtung der Fahrzeugkühlanlage mit einem Gebläsegehäuse der Fahrzeugkühlanlage gewichtskraftübertragend verbunden sind. Hierdurch muss die Gehäusekonstruktion ausreichende Wandstärken aufweisen, um eine ausreichende mechanische Widerstandsfähigkeit bei einer Belastung durch das Eigengewicht der Gebläsevorrichtung, welches beispielweise bis zu 250 kg betragen kann, aufzuweisen. Außerdem sind zusätzliche Verstrebungen notwendig, um eine gewichtskraftübertragende Verbindung zwischen der Gebläsevorrichtung und dem Gebläsegehäuse auszubilden. Die erforderliche Wandstärke und die Verstrebungen führen zu einer nachteiligen Erhöhung des Eigengewichts der Fahrzeugkühlanlage.

Ein weiter Nachteil durch die gewichtskraftübertragende Verbindung zwischen der Gebläsevorrichtung und dem Gebläsegehäuse ergibt sich dadurch, dass die Ausgestaltung des Gebläsegehäuses im Spannungsverhältnis zwischen erforderlicher mechanischer Widerstandsfähigkeit und gewünschter strömungstechnischer Ausgestaltung erfolgen muss. Hierdurch kann eine strömungstechnisch optimale Ausgestaltung des Gebläsegehäuses nicht bereitgestellt werden.

Die vorliegende Erfindung beschäftigt sich mit dem Problem, eine verbesserte oder zumindest eine alternative Ausführungsform einer Fahrzeugkühlanlage und/oder einer Trägervorrichtung für eine Fahrzeugkühlanlage anzugeben, die insbesondere eine Reduktion des Gesamtgewichtes der Fahrzeugkühlanlage und/oder insbesondere eine strömungstechnisch optimale Ausgestaltung des Gebläsegehäuses ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, eine Trägervorrichtung zur Anordnung einer Gebläsevorrichtung der Fahrzeugkühlanlage derart auszubilden, dass die Trägervorrichtung zur Übertragung der Gewichtskraft der Gebläsevorrichtung ausschließlich an einem Kühlluft-Kühlflüssigkeits-Wärmeübertrager der Fahrzeugkühlanlage gewichtskraftübertragend angeordnet ist.

Die erfindungsgemäße Fahrzeugkühlanlage, insbesondere für ein Schienenfahrzeug, weist eine Gebläsevorrichtung zur Erzeugung eines Kühlluftstromes entlang einer Hauptströmungsrichtung auf. Ferner weist die Fahrzeugkühlanlage ein Gebläsegehäuse zur Strömungsführung des durch die Gebläsevorrichtung erzeugten Kühlluftstromes auf, wobei das Gebläsegehäuse einen Strömungsraum ausbildet, den der durch die Gebläsevorrichtung erzeugte Kühlluftstrom durchströmen kann. Die Gebläsevorrichtung kann als Ventilator, insbesondere als Axialventilator, mit einem elektrischen Antrieb ausgebildet sein.

Die Hauptströmungsrichtung kann parallel zu einer Längsmittelachse des Gebläsegehäuses ausgerichtet sein. Die Umfangsrichtung, insbesondere die Umfangsrichtung um das Gebläsegehäuse, kann um die Hauptströmungsrichtung und/oder die Längsmittelachse des Gebläsegehäuses ausgerichtet sein. Hierbei kann die Umfangsrichtung in einer Querebene liegen, die quer und/oder senkrecht zur Hauptströmungsrichtung und/oder zur Längsmittelachse des Gebläsegehäuses ausgerichtet ist.

Ferner weist die Fahrzeugkühlanlage einen vom Kühlluftstrom durchströmbaren Kühlluft-Kühlflüssigkeits-Wärmeübertrager zur Kühlung einer Kühlflüssigkeit auf, die den Kühlluft-Kühlflüssigkeits-Wärmeübertrager in Form eines Kühlflüssigkeitsstromes fluidisch getrennt vom Kühlluftstrom durchströmen kann.

Ferner weist die Fahrzeugkühlanlage eine an dem Kühlluft-Kühlflüssigkeits-Wärmeübertrager angeordnete Trägervorrichtung zur Anordnung der Gebläsevorrichtung im Strömungsraum auf, wobei die Trägervorrichtung einen Aufnahmeraum ausbildet. Insbesondere kann die Trägervorrichtung den Aufnahmeraum begrenzen. Unter dem Aufnahmeraum kann der Raum, insbesondere Luftraum, verstanden werden, der innerhalb der Trägervorrichtung ausgebildet ist. Die Trägervorrichtung kann separat bezüglich des Kühlluft-Kühlflüssigkeits-Wärmeübertragers und/oder separat bezüglich des Gebläsegehäuses ausgebildet sein.

Die Gebläsevorrichtung ist wenigstens teilweise innerhalb des Strömungsraumes angeordnet, wobei die Gebläsevorrichtung ein Laufrad und einen Antriebsmotor zum Antrieb des Laufrades aufweist. Das Laufrad kann ein Axiallaufrad sein, welches vom Kühlluftstrom axial durchströmt werden kann. Der Antriebsmotor kann ein Elektromotor sein. Der Antriebsmotor kann wenigstens teilweise bezüglich der Hauptströmungsrichtung versetzt zum Laufrad angeordnet sein, sodass der Antriebsmotor bezüglich der Hauptströmungsrichtung näher am Kühlluft-Kühlflüssigkeits-Wärmeübertrager angeordnet ist als das Laufrad.

Die Gebläsevorrichtung ist so an der Trägervorrichtung angeordnet, dass der Antriebsmotor wenigstens teilweise im Aufnahmeraum und das Laufrad außerhalb des Aufnahmeraumes angeordnet ist. Die Gebläsevorrichtung kann berührungsfrei bezüglich des Kühlluft-Kühlflüssigkeits-Wärmeübertragers und/oder berührungsfrei bezüglich des Gebläsegehäuses angeordnet sein.

Die Trägervorrichtung ist zur Übertragung der Gewichtskraft der Gebläsevorrichtung ausschließlich am Kühlluft-Kühlflüssigkeits-Wärmeübertrager gewichtskraftübertragend angeordnet. Die Trägervorrichtung kann berührungsfrei bezüglich des Gebläsegehäuses angeordnet sein.

Da eine Übertragung der Gewichtskraft der Gebläsevorrichtung auf das Gebläsegehäuse verhindert wird, kann eine Reduktion des Gesamtgewichtes der Fahrzeugkühlanlage erzielt werden, in dem kleine Wandstärken einsetzbar sind ohne die erforderliche mechanische Widerstandfähigkeit des Gebläsegehäuses zu reduzieren. Zusätzlich kann durch die kleinen Wandstärken eine Materialreduktion und somit eine Kostenreduktion erzielt werden. Ferner kann das Gebläsegehäuse unabhängig von einer einwirkenden Gewichtskraft der Gebläsevorrichtung strömungstechnisch optimiert ausgebildet werden. Somit dient das Gebläsegehäuse ausschließlich der Kühlluftführung.

Bei einer vorteilhaften Weiterbildung der erfindungsgemäßen Lösung ist vorgesehen, dass die Trägervorrichtung einen Motorträger und wenigstens zwei Befestigungsprofile ausbildet, wobei die wenigstens zwei Befestigungsprofile am Kühlluft-Kühlflüssigkeits-Wärmeübertrager angeordnet sind und dass der Motorträger an den zwei Befestigungsprofilen angeordnet ist. Die Befestigungsprofile können jeweils zueinander separat und jeweils separat bezüglich des Motorträgers ausgebildet sein.

Die Befestigungsprofile können voneinander beabstandet angeordnet sein. Die Befestigungsprofile können bezüglich ihrer Längsachse parallel zueinander ausgerichtet sein. Die Befestigungsprofile können eine Längserstreckung bezüglich ihrer Längsachse aufweisen, die größer ist als eine Höhe des Aufnahmeraumes bezüglich der Hauptströmungsrichtung.

Über die Befestigungsprofile kann eine verbesserte Verteilung der auf den Kühlluft-Kühlflüssigkeits-Wärmeübertrager übertragenen Gewichtskraft der Gebläsevorrichtung erzielt werden.

Bei einer weiteren vorteilhaften Ausführungsform der erfindungsgemäßen Lösung ist vorgesehen, dass der Motorträger berührungsfrei, insbesondere vollständig berührungsfrei und/oder vollständig beabstandet, bezüglich des Gebläsegehäuses angeordnet ist.

Hierdurch kann eine Übertragung der Gewichtskraft der Gebläsevorrichtung auf das Gebläsegehäuse verhindert werden.

Bei einer vorteilhaften Weiterbildung der erfindungsgemäßen Lösung ist vorgesehen, dass der Motorträger den Aufnahmeraum der Trägervorrichtung ausbildet, und/oder dass der Aufnahmeraum der Trägervorrichtung in Form eines Pyramidenstumpfes ausgebildet ist.

Der Motorträger kann einen Aufnahmeraum in Form eines Pyramidenstumpfes ausbilden und/oder begrenzen, wobei die Grundfläche des Pyramidenstumpfes an den Befestigungsprofilen ausgebildet sein kann und die im Vergleich zur Grundfläche kleinere Deckfläche beabstandet von den Befestigungsprofilen ausgebildet ist. Hierdurch kann auch der Motorträger pyramidenstumpfartig ausgebildet sein. Hierdurch kann eine verbesserte Verteilung der auf die Befestigungsprofile übertragenen Gewichtskraft der Gebläsevorrichtung erzielt werden.

Bei einer weiteren vorteilhaften Ausführungsform der erfindungsgemäßen Lösung ist vorgesehen, dass der Motorträger als Schraubkonstruktion mehrerer separater Rahmenteile ausgebildet ist, und/oder dass der Motorträger mit den zwei Befestigungsprofilen verschraubt ist, und/oder dass die zwei Befestigungsprofile mit dem Kühlluft-Kühlflüssigkeits-Wärmeübertrager verschraubt sind, und/oder dass die Befestigungsprofile jeweils als Hohlprofile, insbesondere als Rechteckhohlprofile, ausgebildet sind.

Ein Rahmenteil kann ein Rahmen mit einer Durchbruchsöffnung sein. Die Durchbruchsöffnung kann vom Material des Rahmens umlaufend, insbesondere durchgehend umlaufend, umschlossen und/oder begrenzt sein.

Die Schraubkonstruktion kann mehrere separat ausgebildete Rahmenteile umfassen, die miteinander verschraubt sein können. Hierdurch wird eine modulare Bauweise des Motorträgers bereitgestellt. Da die Rahmenteile separat bei der Fertigung, Lackierarbeiten und der Endmontage gehandhabt werden können, muss lediglich ein Bruchteil des Gesamtgewichtes des Motorträgers beim jeweiligen Arbeitsschritt gehandhabt werden. Die Rahmenteile lassen sich einfach und kostengünstig herstellen. Der Motorträger lässt einfach und kostengünstig verschiedene Baugrößen anpassen.

Der Einsatz von Hohlprofilen ermöglicht eine weitere Gewichtsreduktion-

Eine Verschraubung der Rahmenteile und/oder des Motorträger mit den Befestigungsprofilen und/oder der Befestigungsprofile mit dem Kühlluft-Kühlflüssigkeits-Wärmeübertrager kann mittels Schraubmittels ausgebildet sein. Insgesamt kann hierdurch auf eine komplexe und arbeitsaufwendige Schweißkonstruktion verzichtet werden.

Bei einer vorteilhaften Weiterbildung der erfindungsgemäßen Lösung ist vorgesehen, dass der als Schraubkonstruktion ausgebildete Motorträger vier miteinander verschraubte Rahmenteile aufweist. Hierbei weisen zwei Rahmenteile der Schraubkonstruktion eine trapezartige Grundform auf, wohingegen zwei weitere Rahmenteile der Schraubkonstruktion eine rechteckartige Grundform aufweisen. Die Rahmenteile, die eine trapezartige Grundform aufweisen, sind voneinander beabstandet und jeweils an einem Befestigungsprofil angeordnet. Die Rahmenteile, die eine rechteckartige Grundform aufweisen, sind voneinander beabstandet und jeweils an den beiden Rahmenteilen, die eine trapezartige Grundform aufweisen, angeordnet. Die Rahmenteile können separat voneinander ausgebildet und/oder hergestellt sein.

Die Rahmenteile können jeweils eine Durchbruchsöffnung aufweisen, die eine zur Grundform des Rahmenteils formähnliche Durchbruchsöffnungskontur aufweisen. Mit anderen Worten ausgedrückt, kann ein Rahmenteil mit trapezartiger Grundform eine Durchbruchsöffnung mit einer trapezartigen Durchbruchsöffnungskontur aufweisen, wohingegen ein Rahmenteil mit rechteckartiger Grundform eine Durchbruchsöffnung mit einer rechteckartigen Durchbruchsöffnungskontur aufweisen kann. Diese Durchbruchsöffnungskontur können abgerundete Eckbereiche ausbilden, um unzulässige mechanische Spannungen im Rahmenteil zu vermeiden.

Erfindungsgemäß ist weiterhin vorgesehen, dass ein Ausgleichbehältersystem für die Kühlflüssigkeit ausgebildet ist, welches mehrere separat ausgebildete Einzelausgleichsbehälter aufweist, die mittels Kühlflüssigkeitsleitungen fluidisch miteinander verbunden sind und die in einer Umfangsrichtung verteilt und voneinander beabstandet außen am Gebläsegehäuse angeordnet sind. Die voneinander beabstandet angeordnete Einzelausgleichsbehälter können im Wesentlichen gleichartig, insbesondere gleichartig, ausgebildet sein. Die Kühlflüssigkeitsleitungen können bezüglich der Einzelausgleichsbehälter separat ausgebildet sein. Unter "außen am Gebläsegehäuse" kann zu verstehen sein, dass die Einzelausgleichsbehälter außerhalb des Strömungsraumes angeordnet sind, wobei der Strömungsraum durch das Gebläsegehäuse begrenzt und/oder abgegrenzt ist.

Der Kühlluft-Kühlflüssigkeits-Wärmeübertrager kann fluidisch mit einem geschlossen Kühlflüssigkeits-Kreislauf verbunden sein. Das Ausgleichbehältersystem, insbesondere wenigstens Einzelausgleichsbehälter, kann fluidisch mit diesem Kühlflüssigkeits-Kreislauf verbunden sein.

Die Einzelausgleichsbehälter können bezüglich der Umfangsrichtung im Wesentlichen äquidistant, insbesondere äquidistant, außen am Gebläsegehäuse angeordnet sein. Die Einzelausgleichsbehälter können jeweils bezüglich der Hauptströmungsrichtung und/oder bezüglich der Längsmittelachse des Gebläsegehäuses eine Längserstreckung aufweisen, die wenigstens 50%, insbesondere wenigstens 75% oder wenigstens 85%, der Längserstreckung des Gebläsegehäuses bezüglich der Hauptströmungsrichtung und/oder bezüglich der Längsmittelachse entspricht. Die Einzelausgleichsbehälter können jeweils bezüglich der Hauptströmungsrichtung und/oder bezüglich der Längsmittelachse des Gebläsegehäuses eine Längserstreckung aufweisen, die der Längserstreckung des Gebläsegehäuses bezüglich der Hauptströmungsrichtung und/oder bezüglich der Längsmittelachse entspricht.

Die Einzelausgleichsbehälter können jeweils am Gebläsegehäuse lose anliegend angeordnet sein und/oder bezüglich des Gebläsegehäuses verschiebbar angeordnet sein. Hierdurch kann verhindert werden, dass die Gewichtskraft der Einzelausgleichsbehälter und die Gewichtkraft der in den Einzelausgleichsbehältern aufgenommen Kühlflüssigkeit auf das Gebläsegehäuse übertragen und/oder in das Gebläsegehäuse eingeleitet wird. Somit hat das Gewicht des Ausgleichbehältersystems, insbesondere das Gewicht der im Ausgleichbehältersystem aufgenommenen Kühlflüssigkeit, keinen Einfluss auf die mechanische Ausgestaltung des Gebläsegehäuses, die eine ausreichende mechanische Widerstandfähigkeit des Gebläsegehäuses gewährleistet.

Das Ausgleichbehältersystem kann ein Aufnahmevolumen von wenigstens 100 L (bzw. 0,10 m³), insbesondere von 200 bis 320 L (bzw. 0,20 bis 0,32 m³), zur Aufnahme der Kühlflüssigkeit aufweisen. Dieses Aufnahmevolumen kann im Wesentlichen gleichverteilt, insbesondere gleichverteilt, bezüglich der separat ausgebildeten Einzelausgleichsbehälter des Ausgleichbehältersystems sein.

Weiterhin ist erfindungsgemäß vorgesehen, dass die Gebläsevorrichtung wenigstens teilweise innerhalb des Strömungsraumes angeordnet ist, wobei der Kühlluft-Kühlflüssigkeits-Wärmeübertrager stromab der Gebläsevorrichtung bezüglich der Hauptströmungsrichtung des Kühlluftstromes angeordnet ist.

Bei der erfindungsgemäßen Fahrzeugkühlanlage dient das Gebläsegehäuse ausschließlich der Luftführung, sodass eine Reduktion der Materialkosten durch einen zweckmäßigen Materialeinsatz am Gebläsegehäuse ermöglicht wird. Das im Vergleich zum Ausgleichbehältersystem geringere Eigenleergewicht der Einzelausgleichsbehälter erleichtert die Handhabung bei der Fertigung, bei Lackierarbeiten und bei der Endmontage. Somit sind die Einzelbauteile des Ausgleichbehältersystems, insbesondere die Einzelbauteile der Einzelausgleichsbehälter, einfach und kostengünstig zu fertigen. Der Einsatz der Einzelausgleichsbehälter lässt sich unkompliziert an verschiedene Gesamtvolumina anpassen.

Durch die bezüglich der Umfangsrichtung verteilen Einzelausgleichsbehälter ergibt sich für die Fahrzeugkühlanlage ein vorteilhafterer Gesamtschwerpunkt, der bezüglich der Hauptströmungsrichtung näher am Kühlluft-Kühlflüssigkeits-Wärmeübertrager liegt, sodass eine verbesserte mechanische Stabilität bzw. Standfestigkeit erzielt wird. Zusätzlich kann durch die bezüglich der Umfangsrichtung verteilen Einzelausgleichsbehälter ein höheres Aufnahmevolumen bei verbesserten mechanischen Stabilität bzw. Standfestigkeit bereitgestellt werden.

Bei einer vorteilhaften Weiterbildung der erfindungsgemäßen Lösung ist vorgesehen, dass der Kühlluft-Kühlflüssigkeits-Wärmeübertrager quer zur Hauptströmungsrichtung einen Wärmeübertragerquerschnitt aufweist, wobei das Gebläsegehäuse und die Einzelausgleichsbehälter quer zur Hauptströmungsrichtung gemeinsam einen Bauraumquerschnitt aufweisen, der in einer Projektion in der Hauptströmungsrichtung im Wesentlichen innerhalb des Wärmeübertragerquerschnitts liegt. Hierunter kann auch zu verstehen sein, dass der Bauraumquerschnitt in einer Projektion in der Hauptströmungsrichtung im Wesentlichen dem Wärmeübertragerquerschnitt entspricht, insbesondere bezüglich der Querschnittskontur entspricht.

Es kann vorgesehen sein, dass der Motorträger quer zur Hauptströmungsrichtung einen Motorträgerquerschnitt aufweist. Es kann vorgesehen sein, dass das Gebläsegehäuse quer zur Hauptströmungsrichtung einen Gebläsegehäusequerschnitt aufweist. Der Motorträgerquerschnitt kann in einer Projektion in der Hauptströmungsrichtung im Wesentlichen innerhalb des Wärmeübertragerquerschnitts oder im Wesentlichen innerhalb des Gebläsegehäusequerschnitts liegen.

Der Bauraumquerschnitt kann durch eine fiktive Querschnittsbegrenzungskontur definiert sein, die das Gebläsegehäuse und die Einzelausgleichsbehälter in einem Querschnitt quer zur Hauptströmungsrichtung begrenzt bzw. umgrenzt, wobei die fiktive Querschnittsbegrenzungskontur eine minimale Querschnittfläche aufweist. Die fiktive Querschnittsbegrenzungskontur kann der Querschnittskontur des Wärmeübertragerquerschnitts im Wesentlichen entsprechend. Ein Flächenschwerpunkt des Bauraumquerschnittes und ein Flächenschwerpunkt des Wärmeübertragerquerschnitts können bezüglich der Hauptströmungsrichtung fluchtend angeordnet sein.

Hierdurch lässt sich eine besonders kompakte und bauraumoptimierte Ausgestaltung der Fahrzeugkühlanlage erzielen.

Bei einer weiteren vorteilhaften Ausführungsform der erfindungsgemäßen Lösung ist vorgesehen, dass das Gebläsegehäuse eine dem Strömungsraum abgewandte Außenoberfläche aufweist, wobei die Außenoberfläche mehrere Außenoberflächenabschnitte aufweist.

Die Außenoberflächenabschnitte der Außenoberfläche sind so angeordnet, dass die Außenoberflächenabschnitte in einem Querschnitt senkrecht zur Hauptströmungsrichtung eine Außenbegrenzung in Form eines regelmäßigen konvexen Polygons, insbesondere in Form eines regelmäßigen konvexen Achteckes, oder in Form eines Kreises ausbilden. Das regelmäßige konvexe Polygon kann eine gerade Anzahl an Seitenkanten aufweisen. Das regelmäßige konvexe Polygon kann mehr als vier Seitenkanten aufweisen.

Hierdurch lässt sich eine besonders kompakte und bauraumoptimierte Ausgestaltung der Fahrzeugkühlanlage im Spannungsverhältnis des erforderlichen Volumens des Strömungsraums und des erforderlichen Aufnahmevolumens des Ausgleichbehältersystems erzielen.

Bei einer vorteilhaften Weiterbildung der erfindungsgemäßen Lösung ist vorgesehen, dass das Ausgleichbehältersystem einen zylindrischen Einbauraum zur wenigstens teilweisen Aufnahme des Gebläsegehäuses ausbildet, wobei der zylindrische Einbauraum in einem Querschnitt senkrecht zur Hauptströmungsrichtung eine Querschnittsfläche in Form regelmäßigen konvexen Polygons, insbesondere in Form eines regelmäßigen konvexen Achteckes, oder in Form eines Kreises ausbildet.

Der zylindrische Einbauraum kann in einem Querschnitt senkrecht zur Hauptströmungsrichtung eine Ausgestaltung aufweisen, die komplementär zu einer im Querschnitt senkrecht zur Hauptströmungsrichtung betrachteten Außenbegrenzung des Gebläsegehäuses ist.

Hierdurch lässt sich eine besonders kompakte und bauraumoptimierte Ausgestaltung der Fahrzeugkühlanlage erzielen.

Wie bereits erwähnt, umfasst die Fahrzeugkühlanlage eine Trägervorrichtung.

Die Trägervorrichtung ist zur Anordnung einer Gebläsevorrichtung der Fahrzeugkühlanlage in einem Strömungsraum der Fahrzeugkühlanlage ausgebildet. Hierbei ist die Trägervorrichtung derart ausgebildet, dass die Gebläsevorrichtung der Fahrzeugkühlanlage so an der Trägervorrichtung anordbar ist, dass ein Antriebsmotor der Gebläsevorrichtung wenigstens teilweise im Aufnahmeraum und ein Laufrad der Gebläsevorrichtung außerhalb des Aufnahmeraumes anordbar ist. Die Trägervorrichtung ist an einem Kühlluft-Kühlflüssigkeits-Wärmeübertrager der Fahrzeugkühlanlage derart gewichtskraftübertragend anordbar, dass eine Übertragung der Gewichtskraft der Gebläsevorrichtung der Fahrzeugkühlanlage ausschließlich auf den Kühlluft-Kühlflüssigkeits-Wärmeübertrager der Fahrzeugkühlanlage ausbildbar ist.

Da eine Übertragung der Gewichtskraft der Gebläsevorrichtung auf das Gebläsegehäuse verhindert wird, kann eine Reduktion des Gesamtgewichtes der Fahrzeugkühlanlage erzielt werden, in dem kleine Wandstärken einsetzbar sind ohne die erforderliche mechanische Widerstandfähigkeit des Gebläsegehäuses zu reduzieren. Zusätzlich kann durch die kleinen Wandstärken eine Materialreduktion und somit eine Kostenreduktion erzielt werden. Ferner kann das Gebläsegehäuse unabhängig von einer einwirkenden Gewichtskraft der Gebläsevorrichtung strömungstechnisch optimiert ausgebildet werden. Somit dient das Gebläsegehäuse ausschließlich der Kühlluftführung.

Die Trägervorrichtung bildet einen Motorträger und wenigstens zwei Befestigungsprofile aus, wobei die wenigstens zwei Befestigungsprofile am Kühlluft-Kühlflüssigkeits-Wärmeübertrager der Fahrzeugkühlanlage anordbar sind. Der Motorträger ist an den zwei Befestigungsprofilen angeordnet. Die Befestigungsprofile können jeweils zueinander separat und jeweils separat bezüglich des Motorträgers ausgebildet sein.

Die Befestigungsprofile können voneinander beabstandet angeordnet sein. Die Befestigungsprofile können bezüglich ihrer Längsachse parallel zueinander ausgerichtet sein. Die Befestigungsprofile können eine Längserstreckung bezüglich ihrer Längsachse aufweisen, die größer ist als eine Höhe des Aufnahmeraumes bezüglich der Hauptströmungsrichtung.

Über die Befestigungsprofile kann eine verbesserte Verteilung der auf den Kühlluft-Kühlflüssigkeits-Wärmeübertrager übertragenen Gewichtskraft der Gebläsevorrichtung erzielt werden.

Der Motorträger ist berührungsfrei, insbesondere vollständig berührungsfrei und/oder vollständig beabstandet, bezüglich des Gebläsegehäuses innerhalb der Fahrzeugkühlanlage anordbar.

Hierdurch kann eine Übertragung der Gewichtskraft der Gebläsevorrichtung auf das Gebläsegehäuse verhindert werden.

Der Motorträger bildet den Aufnahmeraum der Trägervorrichtung aus, und/oder der Aufnahmeraum der Trägervorrichtung ist in Form eines Pyramidenstumpfes ausgebildet.

Der Motorträger kann einen Aufnahmeraum in Form eines Pyramidenstumpfes ausbilden und/oder begrenzen, wobei die Grundfläche des Pyramidenstumpfes an den Befestigungsprofilen ausgebildet sein kann und die im Vergleich zur Grundfläche kleinere Deckfläche beabstandet von den Befestigungsprofilen ausgebildet ist. Hierdurch kann auch der Motorträger pyramidenstumpfartig ausgebildet sein. Hierdurch kann eine verbesserte Verteilung der auf die Befestigungsprofile übertragenen Gewichtskraft der Gebläsevorrichtung erzielt werden.

Der Motorträger ist als Schraubkonstruktion mehrerer separater Rahmenteile ausgebildet, und/oder der Motorträger ist mit den zwei Befestigungsprofilen verschraubt, und/oder die zwei Befestigungsprofile sind mit Wärmeübertrager der Fahrzeugkühlanlage verschraubar, und/order die Befestigungsprofile sind jeweils als Hohlprofile, insbesondere als Rechteckhohlprofile ausgebildet.

Ein Rahmenteil kann ein Rahmen mit einer Durchbruchsöffnung sein. Die Durchbruchsöffnung kann vom Material des Rahmens umlaufend, insbesondere durchgehend umlaufend, umschlossen und/oder begrenzt sein.

Die Schraubkonstruktion kann mehrere separat ausgebildete Rahmenteile umfassen, die miteinander verschraubt sein können. Hierdurch wird eine modulare Bauweise des Motorträgers bereitgestellt. Da die Rahmenteile separat bei der Fertigung, Lackierarbeiten und der Endmontage gehandhabt werden können, muss lediglich ein Bruchteil des Gesamtgewichtes des Motorträgers beim jeweiligen Arbeitsschritt gehandhabt werden. Die Rahmenteile lassen sich einfach und kostengünstig herstellen. Der Motorträger lässt einfach und kostengünstig verschiedene Baugrößen anpassen.

Der Einsatz von Hohlprofilen ermöglicht eine weitere Gewichtsreduktion-Eine Verschraubung der Rahmenteile und/oder des Motorträger mit den Befestigungsprofilen und/oder der Befestigungsprofile mit dem Kühlluft-Kühlflüssigkeits-Wärmeübertrager kann mittels Schraubmittels ausgebildet sein. Insgesamt kann hierdurch auf eine komplexe und arbeitsaufwendige Schweißkonstruktion verzichtet werden.

Der als Schraubkonstruktion ausgebildete Motorträger weist vier miteinander verschraubte Rahmenteile auf. Hierbei weisen zwei Rahmenteile der Schraubkonstruktion eine trapezartige Grundform auf, wohingegen zwei weitere Rahmenteile der Schraubkonstruktion eine rechteckartige Grundform aufweisen. Die Rahmenteile, die eine trapezartige Grundform aufweisen, sind voneinander beabstandet und jeweils an einem Befestigungsprofil angeordnet. Die Rahmenteile, die eine rechteckartige Grundform aufweisen, sind voneinander beabstandet und jeweils an den beiden Rahmenteilen, die eine trapezartige Grundform aufweisen, angeordnet. Die Rahmenteile können separat voneinander ausgebildet und/oder hergestellt sein.

Die Rahmenteile können jeweils eine Durchbruchsöffnung aufweisen, die eine zur Grundform des Rahmenteils formähnliche Durchbruchsöffnungskontur aufweisen. Mit anderen Worten ausgedrückt, kann ein Rahmenteil mit trapezartiger Grundform eine Durchbruchsöffnung mit einer trapezartigen Durchbruchsöffnungskontur aufweisen, wohingegen ein Rahmenteil mit rechteckartiger Grundform eine Durchbruchsöffnung mit einer rechteckartigen Durchbruchsöffnungskontur aufweisen kann. Diese Durchbruchsöffnungskontur können abgerundete Eckbereiche ausbilden, um unzulässige mechanische Spannungen im Rahmenteil zu vermeiden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine perspektivische Ansicht einer erfindungsgemäßen Fahrzeugkühlanlage,
- Fig. 2: eine perspektivische Explosions-Ansicht der Fahrzeugkühlanlage der Fig. 1,
- Fig. 3: eine perspektivische Teilansicht einer erfindungsgemäßen Fahrzeugkühlanlage,
- Fig. 4: eine weitere perspektivische Teilansicht einer erfindungsgemäßen Fahrzeugkühlanlage, wobei eine Trägervorrichtung in einer perspektivischen Explosions-Ansicht gezeigt ist,
- Fig. 5: einen schematischen Querschnitt durch eine erfindungsgemäße Fahrzeugkühlanlage.

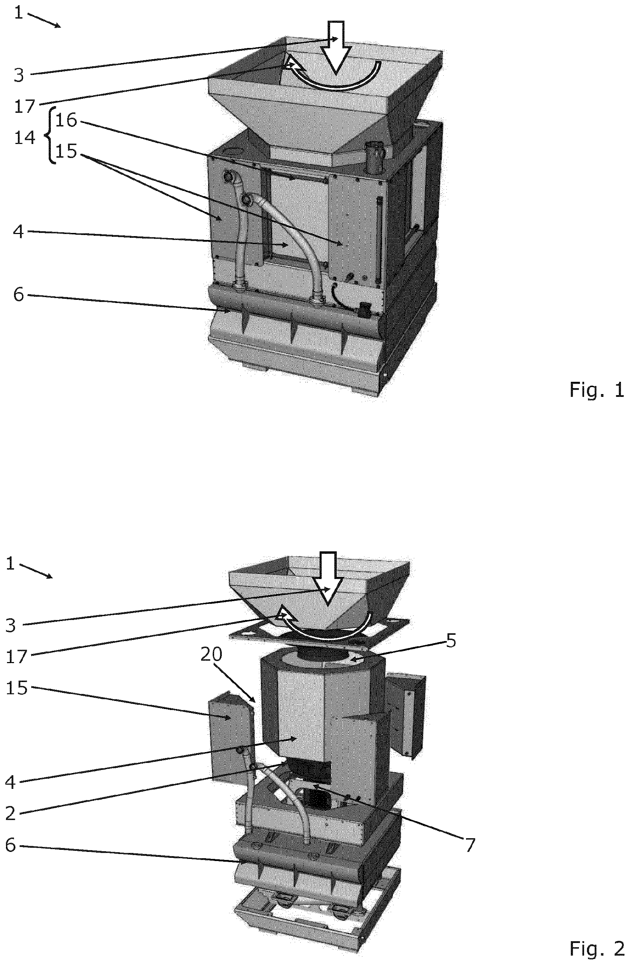

Die Fig. 1 zeigt eine perspektivische Ansicht einer erfindungsgemäßen Fahrzeugkühlanlage 1, die in der Fig. 2 in einer perspektivischen Explosions-Ansicht dargestellt ist.

Die Fahrzeugkühlanlage 1 umfasst eine Gebläsevorrichtung 2 zur Erzeugung eines Kühlluftstromes entlang einer Hauptströmungsrichtung 3 und ein Gebläsegehäuse 4 zur Strömungsführung des durch die Gebläsevorrichtung 2 erzeugten Kühlluftstromes. Das Gebläsegehäuse 4 bildet einen Strömungsraum 5 aus, den der durch die Gebläsevorrichtung 2 erzeugte Kühlluftstrom durchströmen kann. Herbei ist die Gebläsevorrichtung 2, wie in der Fig. 2 dargestellt, wenigstens teilweise innerhalb des Strömungsraumes 5 angeordnet ist.

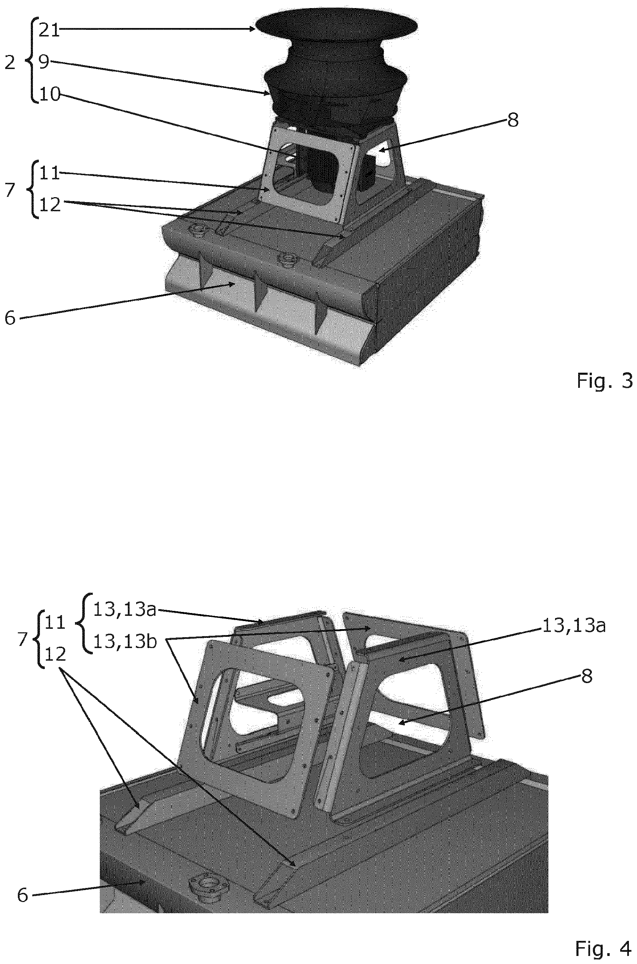

Die Gebläsevorrichtung 2 ist vergrößert und teilweise freigelegt in der Fig. 3 gezeigt. Die Gebläsevorrichtung 2 umfasst ein Laufrad 9 und einen Antriebsmotor 10 zum Antrieb des Laufrades 9. Innerhalb des Gebläsegehäuses 4 kann eine bezüglich des Gebläsegehäuses 4 und eine bezüglich der Gebläsevorrichtung 2 separat ausgebildete Einströmdüse 21 angeordnet sein, deren strömungsquerschnitt bezüglich der Hauptströmungsrichtung 3 in Richtung der Gebläsevorrichtung 2 abnimmt, insbesondere nichtlinear abnimmt. Die Einströmdüse 21 kann an der Gebläsevorrichtung 2 angeordnet sein.

Die Fahrzeugkühlanlage 1 umfasst einen vom Kühlluftstrom durchströmbaren Kühlluft-Kühlflüssigkeits-Wärmeübertrager 6 zur Kühlung einer Kühlflüssigkeit, die den Kühlluft-Kühlflüssigkeits-Wärmeübertrager 6 in Form eines Kühlflüssigkeitsstromes fluidisch getrennt vom Kühlluftstrom durchströmen kann.

Die Fahrzeugkühlanlage 1 kann ein Ausgleichbehältersystem 14 für die Kühlflüssigkeit aufweisen, welches mehrere separat ausgebildete Einzelausgleichsbehälter 15 aufweist. Wie aus der Fig. 1 hervorgeht, können die Einzelausgleichsbehälter 15 mittels Kühlflüssigkeitsleitungen 16 fluidisch miteinander verbunden und in einer Umfangsrichtung 17 verteilt und voneinander beabstandet außen am Gebläsegehäuse 4 angeordnet sein.

Die Fahrzeugkühlanlage 1 umfasst eine einer an dem Kühlluft-Kühlflüssigkeits-Wärmeübertrager 6 angeordneten Trägervorrichtung 7 zur Anordnung der Gebläsevorrichtung 2 im Strömungsraum 5. Dies ist besonders gut in den Fig. 3 und 4 zu erkennen.

Die Trägervorrichtung 7 bildet einen Motorträger 11 und wenigstens zwei Befestigungsprofile 12 aus, wobei die wenigstens zwei Befestigungsprofile 12 am Kühlluft-Kühlflüssigkeits-Wärmeübertrager 6 angeordnet sind, während der Motorträger 11 an den zwei Befestigungsprofilen 12 angeordnet ist.

Die Trägervorrichtung 7, insbesondere der Motorträger 11, bildet einen Aufnahmeraum 8 aus. Die Gebläsevorrichtung 2 ist so an der Trägervorrichtung 7 angeordnet, dass der Antriebsmotor 10 wenigstens teilweise im Aufnahmeraum 8 und das Laufrad 9 außerhalb des Aufnahmeraumes 8 angeordnet ist.

Wie in der Fig. 3 und 4 deutlich dargestellt ist, ist die Trägervorrichtung 7 und insbesondere der Motorträger 11 als Schraubkonstruktion ausgebildet. Der Motorträger 11 umfasst vier miteinander verschraubte Rahmenteile 13, wobei zwei Rahmenteile 13, 13a der Schraubkonstruktion eine trapezartige Grundform aufweisen und wobei zwei Rahmenteile 13, 13b der Schraubkonstruktion eine rechteckartige Grundform aufweisen. Die Rahmenteile 13, 13a, die eine trapezartige Grundform aufweisen, sind voneinander beabstandet und jeweils an einem Befestigungsprofil 12 angeordnet. Die Rahmenteile 13, 13b, die eine rechteckartige Grundform aufweisen, sind voneinander beabstandet und jeweils an den beiden Rahmenteilen 13, 13a, die eine trapezartige Grundform aufweisen, angeordnet.

Die Trägervorrichtung 7 ist zur Übertragung der Gewichtskraft der Gebläsevorrichtung 2 ausschließlich am Kühlluft-Kühlflüssigkeits-Wärmeübertrager 6 gewichtskraftübertragend angeordnet.

In der Fig. 2 ist angedeutet, dass das Ausgleichbehältersystem 14 einen zylindrischen Einbauraum 20 zur wenigstens teilweisen Aufnahme des Gebläsegehäuses 4 ausbildet, wobei der zylindrische Einbauraum 20 in einem Querschnitt senkrecht zur Hauptströmungsrichtung 3 eine Querschnittsfläche in Form regelmäßigen konvexen Polygons, insbesondere in Form eines regelmäßigen konvexen Achteckes, ausbildet. In einer nicht dargestellten Ausführungsform kann diese Querschnittsfläche in Form eines Kreises ausbildet sein.

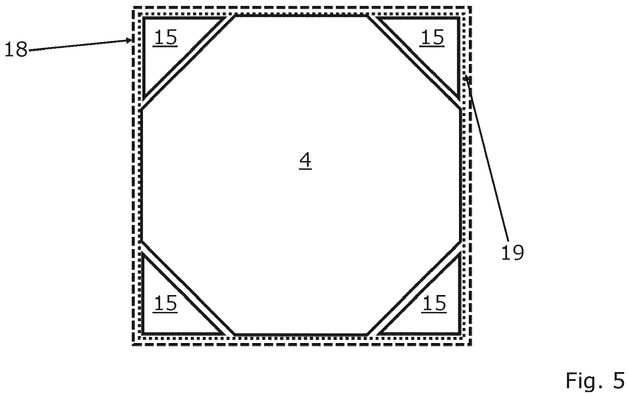

Wie in der Fig. 5 schematisch angedeutet, weist der Kühlluft-Kühlflüssigkeits-Wärmeübertrager 6 quer zur Hauptströmungsrichtung 3 einen Wärmeübertragerquerschnitt 18 auf, wobei das Gebläsegehäuse 4 und die Einzelausgleichsbehälter 8 quer zur Hauptströmungsrichtung 3 gemeinsam einen Bauraumquerschnitt 19 aufweisen, der in einer Projektion (die in der Fig. 5 dargestellt ist) in der Hauptströmungsrichtung 3 im Wesentlichen innerhalb des Wärmeübertragerquerschnitts 38 liegt.

## Patentansprüche

1. Fahrzeugkühlanlage (1), insbesondere für ein Schienenfahrzeug,
- mit einer Gebläsevorrichtung (2) zur Erzeugung eines Kühlluftstromes entlang einer Hauptströmungsrichtung (3),
- mit einem Gebläsegehäuse (4) zur Strömungsführung des durch die Gebläsevorrichtung (2) erzeugten Kühlluftstromes,
- mit einem vom Gebläsegehäuse (4) ausgebildeten Strömungsraum (5), den der durch die Gebläsevorrichtung (2) erzeugte Kühlluftstrom durchströmen kann,
- mit einem vom Kühlluftstrom durchströmbaren Kühlluft-Kühlflüssigkeits-Wärmeübertrager (6) zur Kühlung einer Kühlflüssigkeit, die den Kühlluft-Kühlflüssigkeits-Wärmeübertrager in Form eines Kühlflüssigkeitsstromes fluidisch getrennt vom Kühlluftstrom durchströmen kann,
- mit einer an dem Kühlluft-Kühlflüssigkeits-Wärmeübertrager (6) angeordneten Trägervorrichtung (7) zur Anordnung der Gebläsevorrichtung (2) im Strömungsraum (5),
- wobei die Trägervorrichtung (7) einen Aufnahmeraum (8) ausbildet,
- wobei die Gebläsevorrichtung (2) wenigstens teilweise innerhalb des Strömungsraumes (5) angeordnet ist,
- wobei die Gebläsevorrichtung (2) ein Laufrad (9) und einen Antriebsmotor (10) zum Antrieb des Laufrades (9) aufweist,
- wobei die Gebläsevorrichtung (2) so an der Trägervorrichtung (7) angeordnet ist, dass der Antriebsmotor (10) wenigstens teilweise im Aufnahmeraum (8) und das Laufrad (9) außerhalb des Aufnahmeraumes (8) angeordnet ist,
- wobei die Trägervorrichtung (7) zur Übertragung der Gewichtskraft der Gebläsevorrichtung (2) ausschließlich am Kühlluft-Kühlflüssigkeits-Wärmeübertrager (6) gewichtskraftübertragend angeordnet ist,
**dadurch gekennzeichnet, dass**
- ein Ausgleichbehältersystem (14) für die Kühlflüssigkeit ausgebildet ist, welches mehrere separat ausgebildete Einzelausgleichsbehälter (15) aufweist, die mittels Kühlflüssigkeitsleitungen (16) fluidisch miteinander verbunden sind und die in einer Umfangsrichtung (17) verteilt und voneinander beabstandet außen am Gebläsegehäuse (4) angeordnet sind,
- der Kühlluft-Kühlflüssigkeits-Wärmeübertrager (6) stromab der Gebläsevorrichtung (2) bezüglich der Hauptströmungsrichtung (3) des Kühlluftstromes angeordnet ist.

2. Fahrzeugkühlanlage (1) nach Anspruch 1,
**dadurch gekennzeichnet, dass**
- die Trägervorrichtung (7) einen Motorträger (11) und wenigstens zwei Befestigungsprofile (12) ausbildet,
- die wenigstens zwei Befestigungsprofile (12) am Kühlluft-Kühlflüssigkeits-Wärmeübertrager (6) angeordnet sind,
- der Motorträger (11) an den zwei Befestigungsprofilen (12) angeordnet ist.

3. Fahrzeugkühlanlage (1) nach Anspruch 2,
**dadurch gekennzeichnet, dass**
der Motorträger (11) berührungsfrei bezüglich des Gebläsegehäuses (4) angeordnet ist.

4. Fahrzeugkühlanlage (1) nach Anspruch 2 oder 3,
**dadurch gekennzeichnet, dass**
- der Motorträger (11) den Aufnahmeraum (8) der Trägervorrichtung (7) ausbildet, und/oder
- der Aufnahmeraum (8) der Trägervorrichtung (7) in Form eines Pyramidenstumpfes ausgebildet ist.

5. Fahrzeugkühlanlage (1) nach einem der Ansprüche 2 bis 4,
**dadurch gekennzeichnet, dass**
- der Motorträger (11) als Schraubkonstruktion mehrerer separater Rahmenteile (13) ausgebildet ist, und/oder
- der Motorträger (11) mit den zwei Befestigungsprofilen (12) verschraubt ist, und/oder
- die zwei Befestigungsprofile (12) mit dem Kühlluft-Kühlflüssigkeits-Wärmeübertrager (6) verschraubt sind, und/oder
- die Befestigungsprofile (12) jeweils als Hohlprofile, insbesondere als Rechteckhohlprofile, ausgebildet sind.

6. Fahrzeugkühlanlage (1) nach Anspruch 5,
**dadurch gekennzeichnet, dass**
- der als Schraubkonstruktion ausgebildete Motorträger (11) vier miteinander verschraubte Rahmenteile (13) aufweist,
- zwei Rahmenteile (13, 13a) der Schraubkonstruktion eine trapezartige Grundform aufweisen,
- zwei Rahmenteile (13, 13b) der Schraubkonstruktion eine rechteckartige Grundform aufweisen,
- die Rahmenteile (13, 13a), die eine trapezartige Grundform aufweisen, voneinander beabstandet und jeweils an einem Befestigungsprofil (12) angeordnet sind,
- die Rahmenteile (13, 13b), die eine rechteckartige Grundform aufweisen, voneinander beabstandet und jeweils an den beiden Rahmenteilen (13, 13a), die eine trapezartige Grundform aufweisen, angeordnet sind.

7. Fahrzeugkühlanlage (1) nach einem der vorhergehenden Ansprüche,
**dadurch gekennzeichnet, dass**
- der Kühlluft-Kühlflüssigkeits-Wärmeübertrager (6) quer zur Hauptströmungsrichtung (3) einen Wärmeübertragerquerschnitt (18) aufweist,
- das Gebläsegehäuse (4) und die Einzelausgleichsbehälter (8) quer zur Hauptströmungsrichtung (3) gemeinsam einen Bauraumquerschnitt (19) aufweisen, der in einer Projektion in der Hauptströmungsrichtung (3) im Wesentlichen innerhalb des Wärmeübertragerquerschnitts liegt.

8. Fahrzeugkühlanlage (1) nach einem der vorhergehenden Ansprüche,
**dadurch gekennzeichnet, dass**
- das Gebläsegehäuse (4) eine dem Strömungsraum (5) abgewandte Außenoberfläche aufweist,
- die Außenoberfläche mehrere Außenoberflächenabschnitte aufweist,
- die Außenoberflächenabschnitte der Außenoberfläche so angeordnet sind, dass die Außenoberflächenabschnitte in einem Querschnitt senkrecht zur Hauptströmungsrichtung (3) eine Außenbegrenzung in Form eines regelmäßigen konvexen Polygons, insbesondere in Form eines regelmäßigen konvexen Achteckes, oder in Form eines Kreises ausbilden.

9. Fahrzeugkühlanlage (1) nach einem der vorhergehenden Ansprüche,
**dadurch gekennzeichnet, dass**
- das Ausgleichbehältersystem (7) einen zylindrischen Einbauraum (20) zur wenigstens teilweisen Aufnahme des Gebläsegehäuses (4) ausbildet,
- der zylindrische Einbauraum (20) in einem Querschnitt senkrecht zur Hauptströmungsrichtung (3) eine Querschnittsfläche in Form regelmäßigen konvexen Polygons, insbesondere in Form eines regelmäßigen konvexen Achteckes, oder in Form eines Kreises ausbildet.

## Claims

1. Vehicle cooling system (1), in particular for a railway vehicle,
- with a fan device (2) for generating a cooling air flow along a main flow direction (3),
- with a fan housing (4) for guiding the flow of cooling air generated by the fan device (2),
- with a flow chamber (5) formed by the fan housing (4) through which the cooling air flow generated by the fan (2) can flow,
- with a cooling air/cooling fluid heat exchanger (6) through which cooling air flow can flow for cooling a cooling fluid, which can flow through the cooling air/cooling fluid heat exchanger in the form of a cooling fluid flow fluidically separated from the cooling air flow,
- with a support device (7) arranged on the cooling air/cooling fluid heat exchanger (6) for arranging the fan device (2) in the flow chamber (5),
- wherein the support device (7) forms a receiving chamber (8),
- wherein the fan device (2) is arranged at least partially inside the flow chamber (5),
- wherein the fan device (2) has an impeller (9) and a drive motor (10) for driving the impeller (9),
- wherein the fan device (2) is arranged on the support device (7) so that the drive motor (10) is arranged at least partially in the receiving chamber (8) and the impeller (9) is arranged outside the receiving chamber (8),
- wherein the support device (7) for transmitting the weight force of the fan device (2) is arranged to transmit the weight force exclusively at the cooling air-cooling fluid-heat exchanger (6),
**characterized in that**,
- an expansion tank system (14) for the cooling fluid is formed which has a plurality of separately formed individual expansion tanks (15), which are fluidically connected to one another by means of cooling fluid lines (16) and are distributed in circumferential direction (17) and are arranged spaced apart from one another on the outside of the fan housing (4),
- the cooling air/cooling fluid heat exchanger (6) is arranged downstream of the fan device (2) with respect to the main flow direction (3) of the cooling air flow.

2. Vehicle cooling system (1) according to claim 1,
**characterized in that**,
- the support device (7) forms an engine mount (11) and at least two fastening profiles (12),
- the at least two fastening profiles (12) are arranged on the cooling air/cooling fluid heat exchanger (6),
- the engine mount (11) is arranged on the two fastening profiles (12).

3. Vehicle cooling system (1) according to claim 2,
**characterized in that**,
the engine mount (11) is arranged without contact with respect to the fan housing (4).

4. Vehicle cooling system (1) according to claim 2 or 3,
**characterized in that**,
- the engine mount (11) forms the receiving chamber (8) of the support device (7), and/or
- the receiving chamber (8) of the support device (7) is in the form of a truncated pyramid.

5. Vehicle cooling system (1) according to any one of claims 2 to 4,
**characterized in that**,
- the engine mount (11) is configured as a screw construction of several separate frame parts (13), and/or
- the engine mount (11) is screwed to the two fastening profiles (12), and/or
- the two fastening profiles (12) are screwed to the cooling air/cooling fluid heat exchanger (6), and/or
- the fastening profiles (12) are each configured as hollow profiles, in particular as rectangular hollow profiles.

6. Vehicle cooling system (1) according to claim 5,
**characterized in that**,
- the engine mount (11), configured as a screw construction, has four frame parts (13) screwed together,
- two frame parts (13, 13a) of the screw construction have a trapezoidal basic shape,
- two frame parts (13, 13b) of the screw construction have a rectangular basic shape,
- the frame parts (13, 13a), which have a trapezoidal basic shape, are spaced apart from one another and are each arranged on a fastening profile (12),
- the frame parts (13, 13b), which have a rectangular basic shape, are spaced apart from one another and are each arranged on the two frame parts (13, 13a), which have a trapezoidal basic shape.

7. Vehicle cooling system (1) according to any one of the preceding claims,
**characterized in that**,
- the cooling air/cooling fluid heat exchanger (6) has a heat exchanger cross-section (18) transverse to the main flow direction (3),
- the fan housing (4) and the individual expansion tanks (8) have a common installation space cross-section (19) transverse to the main flow direction (3) which, in a projection in the main flow direction (3), is essentially within the heat exchanger cross-section.

8. Vehicle cooling system (1) according to any one of the preceding claims,
**characterized in that**,
- the fan housing (4) has an outer surface facing away from the flow chamber (5),
- the outer surface has a plurality of outer surface sections,
- the outer surface sections of the outer surface are arranged such that the outer surface sections form an external boundary in a cross-section perpendicular to the main flow direction (3) in the form of a regular convex polygon, in particular in the form of a regular convex octagon or in the form of a circle.

9. Vehicle cooling system (1) according to any one of the preceding claims,
**characterized in that**,
- the expansion tank system (7) forms a cylindrical installation space (20) for at least partially accommodating the fan housing (4),
- the cylindrical installation space (20) forms a cross-sectional area in the form of a regular convex polygon, in particular in the form of regular convex octagon, or in the form of a circle, in a cross-section perpendicular to the main flow direction (3).

## Revendications

1. Installation de refroidissement de véhicule (1), en particulier pour un véhicule ferroviaire,
- avec un dispositif de soufflerie (2) pour produire un flux d'air de refroidissement le long d'un sens d'écoulement principal (3),
- avec un carter de soufflerie (4) pour guider l'écoulement du flux d'air de refroidissement produit par le dispositif de soufflerie (2),
- avec un espace d'écoulement (5) formé par le carter de soufflerie (4) que le flux d'air de refroidissement produit par le dispositif de soufflerie (2) peut traverser,
- avec un échangeur de chaleur air de refroidissement-liquide de refroidissement (6) pouvant être traversé par le flux d'air de refroidissement pour refroidir un liquide de refroidissement, qui peut traverser l'échangeur de chaleur air de refroidissement-liquide de refroidissement sous la forme d'un flux de liquide de refroidissement séparé fluidiquement par le flux d'air de refroidissement,
- avec un dispositif de support (7) disposé au niveau de l'échangeur de chaleur air de refroidissement-liquide de refroidissement (6) pour agencer le dispositif de soufflerie (2) dans l'espace d'écoulement (5),
- dans lequel le dispositif de support (7) forme un espace de réception (8),
- dans lequel le dispositif de soufflerie (2) est disposé au moins partiellement à l'intérieur de l'espace d'écoulement (5),
- dans lequel le dispositif de soufflerie (2) présente une roue (9) et un moteur d'entraînement (10) pour entraîner la roue (9),
- dans lequel le dispositif de soufflerie (2) est disposé au niveau du dispositif de support (7) de sorte que le moteur d'entraînement (10) est disposé au moins partiellement dans l'espace de réception (8) et la roue (9) à l'extérieur de l'espace de réception (8),
- dans lequel le dispositif de support (7) pour transférer la force de gravité du dispositif de soufflerie (2) est disposé de manière à transférer la force de gravité exclusivement à l'échangeur de chaleur air de refroidissement-liquide de refroidissement (6),
**caractérisé en ce que**
- un système de réservoirs de compensation (14) est formé pour le liquide de refroidissement, système qui présente plusieurs réservoirs de compensation (15) qui sont raccordés fluidiquement entre eux au moyen de conduites de liquides de refroidissement (16) et qui sont répartis dans une direction circonférentielle (17) et sont disposés en étant espacés les uns des autres à l'extérieur du carter de soufflerie (4),
- l'échangeur de chaleur air de refroidissement-liquide de refroidissement (6) est disposé en aval du dispositif de soufflerie (2) par rapport au sens d'écoulement principal (3) du flux d'air de refroidissement.

2. Système de refroidissement de véhicule (1) selon la revendication 1,
**caractérisé en ce que**
- le dispositif de support (7) forme un support de moteur (11) et au moins deux profilés de fixation (12),
- les au moins deux profilés de fixation (12) sont disposés au niveau de l'échangeur de chaleur air de refroidissement-liquide de refroidissement (6),
- le support de moteur (11) est disposé au niveau des deux profilés de fixation (12).

3. Système de refroidissement de véhicule (1) selon la revendication 2,
**caractérisé en ce que**
le support de moteur (11) est disposé sans contact par rapport au carter de soufflerie (4).

4. Système de refroidissement de véhicule (1) selon la revendication 2 ou 3,
**caractérisé en ce que**
- le support de moteur (11) forme l'espace de réception (8) du dispositif de support (7), et/ou
- l'espace de réception (8) du dispositif de support (7) est formé sous la forme d'une pyramide tronquée.

5. Système de refroidissement de véhicule (1) selon l'une quelconque des revendications 2 à 4,
**caractérisé en ce que**
- le support de moteur (11) est formé comme construction à vis de plusieurs parties de cadre (13) séparées, et/ou
- le support de moteur (11) est vissé aux deux profilés de fixation (12), et/ou
- les deux profilés de fixation (12) sont vissés à l'échangeur de chaleur air de refroidissement-liquide de refroidissement (6), et/ou
- les profilés de fixation (12) sont formés respectivement comme des profilés creux, en particulier comme des profilés creux rectangulaires.

6. Système de refroidissement de véhicule (1) selon la revendication 5,
**caractérisé en ce que**
- le support de moteur (11) formé comme construction à vis présente quatre parties de cadre (13) vissées les unes aux autres,
- deux parties de cadre (13, 13a) de la construction à vis présentent une forme de base trapézoïdale,
- deux parties de cadre (13, 13b) de la construction à vis présentent une forme de base rectangulaire,
- les parties de cadre (13, 13a), qui présentent une forme de base trapézoïdale, sont espacées l'une de l'autre et sont disposés respectivement au niveau d'un profilé de fixation (12),
- les parties de cadre (13, 13b), qui présentent une forme de base rectangulaire, sont espacées l'une de l'autre et sont disposés respectivement au niveau des deux parties de cadre (13, 13a), qui présentent une forme de base trapézoïdale.

7. Système de refroidissement de véhicule (1) selon l'une quelconque des revendications précédentes,
**caractérisé en ce que**
- l'échangeur de chaleur air de refroidissement-liquide de refroidissement (6) présente une section transversale de l'échangeur de chaleur (18) transversalement au sens d'écoulement principal (3),
- le carter de soufflerie (4) et les réservoirs de compensation individuels (8) présentent transversalement au sens d'écoulement principal (3) conjointement une section transversale d'espace de montage (19) qui se trouve, dans une projection dans le sens d'écoulement principal (3), sensiblement à l'intérieur de la section transversale de l'échangeur de chaleur.

8. Système de refroidissement de véhicule (1) selon l'une quelconque des revendications précédentes,
**caractérisé en ce que**
- le carter de soufflerie (4) présente une surface extérieure opposée à l'espace d'écoulement (5),
- la surface extérieure présente plusieurs sections de surface extérieure,
- les sections de surface extérieure de la surface extérieure sont disposées de sorte que les sections de surface extérieure forment dans une section transversale perpendiculaire au sens d'écoulement principal (3) une délimitation extérieure sous la forme d'un polygone convexe régulier, en particulier sous la forme d'un octogone convexe régulier, ou sous la forme d'un cercle.

9. Système de refroidissement de véhicule (1) selon l'une quelconque des revendications précédentes,
**caractérisé en ce que**
- le système de réservoirs de compensation (7) forme un espace de montage cylindrique (20) pour recevoir au moins partiellement le carter de soufflerie (4),
- l'espace de montage cylindrique (20) forme une surface de sections transversales sous la forme d'un polygone convexe régulier, en particulier sous la forme d'un octogone convexe régulier, ou sous la forme d'un cercle dans une section transversale perpendiculaire au sens d'écoulement principal (3).
